# EUROPEAN PATENT APPLICATION

(11) **EP 4 660 769 A1**
(43) Date of publication of application: **10.12.2025**
(21) Application number: 24749632.6
(22) Date of filing: 26.01.2024
(51) Int. Cl.: G06F 3/04842

(54) **INTERACTION METHOD AND APPARATUS, DEVICE, AND STORAGE MEDIUM**

(30) Priority: 02.02.2023 CN 202310124705
(71) Applicant: Beijing Zitiao Network Technology Co., Ltd., Beijing 100190 (CN)
(72) Inventor: SHI, Yongbiao, Beijing 100028 (CN); LI, Peifeng, Beijing 100028 (CN)
(74) Representative: Grünecker Patent- und Rechtsanwälte PartG mbB
(86) International application number: PCT/CN2024/074276
(87) International publication number: WO 2024/160151

(57) **Abstract**

Embodiments of the disclosure provide a method, apparatus and device, and storage medium for interaction. The method includes: presenting a first region and a second region in a content presenting page of a target user, the first region presenting at least a portion of target content; in response to a first preconfigured operation in a content presenting page, expanding the first region as a first expanded region, to cause at least a portion of the second region to be hidden or reduced; and presenting the target content and at least one interactive interface element associated with the target content in the first expanded region. According to the embodiments of the present disclosure, an interaction manner in a content presenting page can be simplified and unified, thereby enhancing the interaction depth, and improving user experience.

## Description

**This** application claims priority to Chinese Patent Application No. 202310124705.3, filed with the Chinese Patent Office on February 2, 2023 and entitled "INTERACTION METHOD AND APPARATUS, DEVICE, AND STORAGE MEDIUM", which is incorporated herein by reference in its entirety.

### FIELD

Example embodiments of the present disclosure generally relate to computer field, and more particularly, to a method, apparatus, device, and computer readable storage medium for interaction.

### BACKGROUND

Currently, there are more and more applications, websites, and other applications that enable a user to interact with others on a network and share information. More and more applications and websites enable media content sharing functionality such as short videos, images, and the like. Users can not only share content they have captured or created, but also conveniently browse the content shared by other users, and interact with other users.

### SUMMARY

**In** a first aspect of the present disclosure, a method for interaction is provided. The method comprises: presenting a first region and a second region in a content presentation page of a target user, the first region presenting at least a portion of target content; expanding the first region as a first expanded region in response to a first preconfigured operation in the content presenting page, to cause at least a portion of the second region to be hidden or reduced; and presenting the target content and at least one interactive interface element associated with the target content in the first expanded region.

**In** a second aspect of the present disclosure, an apparatus for interaction is provided. The apparatus comprises: a first presenting module, configured to present a first region and a second region in a content presenting page of a target user, the first region presenting at least a portion of target content; an expansion module, configured to expand the first region as a first expanded region in response to a first preconfigured operation in the content presenting page, to cause at least a portion of the second region to be hidden or reduced; and a second presenting module, configured to present the target content and at least one interactive interface element associated with the target content in the first expanded region.

In a third aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the disclosure, a computer readable storage medium is provided. The computer readable storage medium has a computer program stored thereon which, when executed by a processor, implements the method of the first aspect.

**It** should be understood that what is described in this section is not intended to limit the critical features or essential features of the embodiments of the present disclosure, nor is it intended to limit the scope of the disclosure. Other features of the present disclosure will become easily appreciated from the following description.

### BRIEF DESCRIPTION OF THE DRAWINGS

The above and other features, advantages, and aspects of various embodiments of the present disclosure will become more apparent with reference to the following detailed description taken together with the accompanying drawings. In the drawings, the same or similar reference signs denote the same or similar elements, wherein:
Fig. 1 illustrates a schematic diagram of an example environment in which embodiments of the present disclosure can be implemented;
Fig. 2 illustrates a flowchart of a process for interaction, according to some embodiments of the disclosure;
Fig. 3A illustrates a schematic diagram of an example page in which target content presented in a first region is an image, according to some embodiments of the disclosure;
Fig. 3B illustrates a schematic diagram of an example page of an image with target content presented in a first expanded region, according to some embodiments of the disclosure;
Fig. 3C illustrates a schematic diagram of an example page of interaction in a first expanded region of a presenting image, according to some embodiments of the disclosure;
Fig. 4A illustrates a schematic diagram of an example page where target content is video, according to some embodiments of the disclosure;
Fig. 4B illustrates a schematic diagram of an example page in which target content presented by a first expanded region is a video, according to some embodiments of the disclosure;
Fig. 4C illustrates a schematic diagram of an example page of interaction in presenting a first expanded region of a video, according to some embodiments of the disclosure;
Fig. 5A illustrates a schematic diagram of an example page in which target content is a webpage, for example, a business page, according to some embodiments of the disclosure;
Fig. 5B illustrates a schematic diagram of an example page in which target content presented in a first expanded region is a merchant webpage, according to some embodiments of the present disclosure;
Fig. 5C illustrates a schematic diagram of an example page showing interaction in a first expanded region of a merchant webpage being presented, according to some embodiments of the disclosure;
Fig. 6A illustrates a schematic diagram of an example page where target content is a webpage, for example, an active webpage, according to some embodiments of the disclosure;
Fig. 6B illustrates a schematic diagram of an example page in which target content presented by a first expanded region is an active webpage, according to some embodiments of the present disclosure;
Fig. 6C illustrates a schematic diagram of an example page of interaction in presenting a first expanded region of an active webpage, according to some embodiments of the present disclosure;
Fig. 7 illustrates a block diagram of an apparatus for interaction, according to some embodiments of the disclosure; and
Fig. 8 illustrates an electronic device in which one or more embodiments of the present disclosure may be implemented.

### DETAILED DESCRIPTION

Embodiments of the present disclosure will be described in more detail below with reference to the accompanying drawings. Although certain embodiments of the present disclosure are illustrated in the accompanying drawings, it should be understood that the present disclosure may be implemented in various forms and should not be construed as being limited to the embodiments set forth herein. On the contrary, these embodiments are provided for a thorough and complete understanding of the present disclosure. It should be understood that the drawings and embodiments of the present disclosure are only for exemplary purposes and are not intended to limit the scope of protection of the present disclosure.

In the description of the embodiments of the present disclosure, the term "including" and the like should be understood as open-ended including, that is, "including but not limited to". The term "based on" should be read as "based at least in part on". The term "one embodiment" or "the embodiment" should be read as "at least one embodiment". The term "some embodiments" should be understood as "at least some embodiments". Other explicit and implicit definitions may also be included below.

Herein, unless explicitly stated otherwise, "performing a step in response to A" does not mean that the step is performed immediately after "A" but may include one or more intermediate steps.

It will be appreciated that the data involved in the present technology (including but not limited to the data itself, the acquisition or use of the data) should comply with the requirements of the corresponding legal regulations and related provisions.

It should be understood that, before the technical solutions disclosed in the embodiments of the present disclosure are used, the user should be informed of the type of the personal information, the usage range, the usage scenario, and the like related to the present disclosure and the authorization of the user should be obtained in an appropriate manner according to relevant legal regulations.

For example, in response to receiving an active request from a user, prompt information is sent to the user to explicitly prompt the user, that the operation requested to be executed by the user will need to obtain and use personal information of the user, so that the user can autonomously choose, according to the prompt information, whether to provide the personal information to software or hardware such as an electronic device, an application program, a server, or a storage medium that executes the operation of the technical solutions of the present disclosure.

As an optional but non-limiting implementation, in response to receiving an active request of a user, a manner of sending prompt information to the user may be, for example, a manner of a pop-up window, where the pop-up window may present the prompt information in text. In addition, the pop-up window may also carry a selection control for the user to choose "agree" or "disagree" to provide personal information to the electronic device.

It should be understood that the above processes of notifying and obtaining e user authorization are merely exemplary, and do not limit the implementation of the present disclosure, and other methods complying with relevant laws and regulations may also be applied to the implementation of the present disclosure.

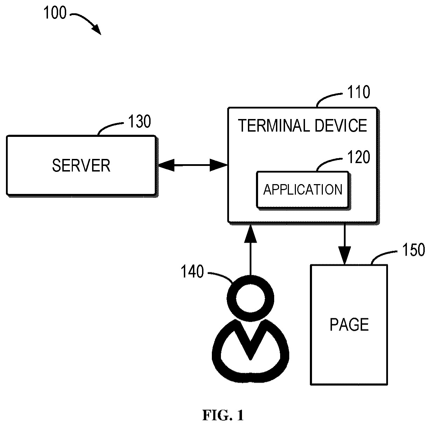

Fig. 1 shows a schematic diagram of an example environment 100 in which embodiments of the present disclosure can be implemented. In this example environment 100, an application 120 is installed on a terminal device 110. The user 140 may interact with the application 120 via the terminal device 110 and/or an accessory device attached to the terminal device 110. Application 120 may be a social application (for example, a content sharing application) or any other suitable application. Applications 120 can provide one or more services related to media content to users 140, including creating, publishing, browsing, commenting on, forwarding, and the like. of media content. As used herein, "media content" includes one or more types of content, such as images, image sets, videos, GIFs, audio, text, and the like.

**In** the environment 100 of Fig. 1, if the application 120 is in an active state, the terminal device 110 may present a page 150 of the application 120. The page 150 may include various types of pages provided by the application 120, including a content presenting page, a detail page of media content, a content creation page, a content publishing page, a message page, and the like. The types of pages provided by the application 120 may further include, for example, a home page for an e-commerce store, a product presenting page, an event details page for a specific event, and so forth. The application 120 may provide content creation functionality including capturing, uploading, editing, and/or publishing media content.

**In** some embodiments, the terminal device 110 communicates with the server 130 to enable the provision of services to the application 120. The terminal device 110 may be any type of mobile terminal, fixed terminal, or portable terminal including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as "wearable" circuitry, and the like.). Server 130 may be various types of computing systems/servers capable of providing computing capabilities including, but not limited to, mainframe computers, edge computing nodes, computing devices in a cloud environment, and the like.

**It** should be understood that the structure and function of the various elements in environment 100 are described for exemplary purposes only and are not intended to imply any limitation on the scope of the disclosure.

A plurality of pages presented in an application are used to present a variety of information to a user. On certain pages in the application, sometimes configuration of hidden or partially hidden content may be supported. The hidden or partially hidden content may be presented by a specific operation. For example, such content is typically an image, which may be configured as a background map of the current page and may be enlarged for presenting by a specific operation. However, interactions for hidden or partially hidden content are complex and non-unified, which affects user experience.

According to embodiments of the present disclosure, a solution is provided. According to the solution, a first region and a second region are presented in a content presenting page of a user. If a preconfigured operation (for example, a pull-down operation) on the content presenting page is detected, the first region is expanded as the first expanded region, and the second region is at least partially hidden. Target content (for example, images, video, webpages) that was previously partially hidden is presented more completely in the first expanded region, and at least one interactive interface element associated with the target content is also presented in the first expanded region. The interactive interface elements can support a user to perform interaction related to target content according to needs. In this way, the solution can support a simplified and unified interaction manner on a content presenting page, thereby enhancing the interaction depth, and further improving the user experience.

Some example embodiments of the present disclosure will be described below with reference to the accompanying drawings.

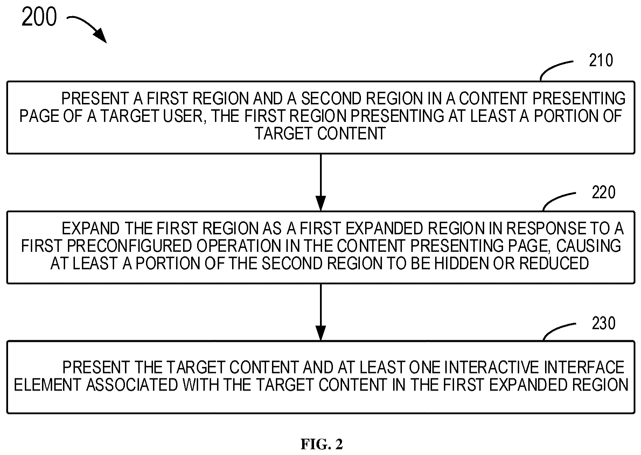

Fig. 2 illustrates a flowchart of a process 200 for interaction, according to some embodiments of the disclosure. The process 200 may be implemented at the terminal device 110. For ease of discussion, the process 200 will be described with reference to the environment 100 of Fig. 1.

At block 210, the terminal device 110 presents a first region and a second region in the content presenting page of a target user, where the first region presents at least a portion of the target content.

In various applications, a content presenting page of a target user is primarily used for presenting basic information of the target user, and if available, also presenting media content associated to the target user, for example, media content published by the target user, and/or media content of other users that the target user follows, saves, likes and shares. At least part of the information in the content presenting page may be customizable by a target user, to showcase interests, personal characteristics, and the like. of the target user. In some embodiments, such content presenting pages may include individual home pages of a target user. In some embodiments, such content presenting pages may include other pages specific to the user. In general, a content presenting page may be presented in response to an access operation by a current user. The current user may be any user of an application or website, including the target user itself, or other users.

In some embodiments, user basic information, user related media content, and the like of the user presenting page may be presented in a second region of the content presenting page. For example, the second region of the content presenting page may present information such as a user name, a user avatar, a personal introduction, a user following status of the target user, and presentation of content associated with the user and the like. In addition, the content presenting page may further include a specific region (i.e., "first region"), which may be configured to present specific content (i.e., "target content").

In some embodiments, in the content presenting page, at least a portion of the target content in the first region may be presented as a background. Accordingly, the content in the second region may be presented as a foreground. In this manner, visually, the content in the second region in the content presenting page may be presented more prominently, for example, being superimposed on at least a part of the target content presented in the first region.

The target content in the first region may be used to present specific content required by the target user to be presented to other users, so that other users can quickly and clearly understand characteristics of the target user through the target content. Such specific content may be content published by the target user itself, or content liked or collected by the target user, content published by other users, and the like. As an example, during a particular period such as a holiday, special holiday, and the like, the target content may present content that aligns with the atmosphere of that time period. For example, during Christmas holidays, the target content may be content such as Santa Claus, sleighs, Christmas music, and the like. For example, the target content may present content capable of highlighting the interests, characteristics, original work, and the like of the target user.

In some embodiments, the target content in the first region is configurable by the target user, and the type of content configurable by the target user is associated with the type of the target user. For example, the terminal device 110 may determine the type of target content configurable by the target user based on the type of the target user. As an example, users may be categorized to, for example, social -type users, business-type users, and the like. A social-type user may be an individual user, while a business-type user may be a certified company, a store, an official organization, and the like.

Different types of users may configurate content corresponding to their respective user types. Exemplarity, the content configured by a social-type user may also be personalized content such as hobbies and original works that the user needs to present in social interactions. For example, a user who is a cat enthusiast may configure content related to cats, and a user who is a motorcycle enthusiast may configure content related to motorcycles. Music creators can configure content related to original music. As an example, content configured by a business-type user may be content related to merchandise that the user needs to show to other users. For example, a user operating a supermarket may configure content related to food, beverages, toys, seasonal goods, and the like. A user who sells clothing may configure content related to styling, and the present disclosure is not particularly limited in this regard.

As an example, content configured by a social-type user may be content related to merchandise that needs to be presented to other users during a business process by the type of user. Similarly, the content configured by a business-type user may be personalized content that belongs to a person, such as social identities, hobbies, original works, and the like, that this type users need to show to other users during social interactions.

In addition, a target user (for example, a social-type user and a business-type user) needs to present some specific events in a content presenting page, for example, during various activities, the target content may be content associated with the activities. Such content may be configured proactively by the target user or configurated automatically by the system if the target user's permission is obtained. As an example, activity-associated content can include an activity detail page, a promotional page for the user in a large-scale activity, and the like.

In some embodiments, the target content may include static content, such as an image. In some embodiments, the target content may include dynamic content, such as a video. In some embodiments, the target content may also include compound content, such as a webpage. As an example, the image may be an image uploaded locally by the target user, a repost of an image published by the target user himself, a repost of an image published by other users, and the like. Similarly, the video may be a video locally uploaded by the target user, a repost of a video published by the target user itself, a repost of a video published by another users, and the like. As an example, the webpage may be a webpage related to an e-commerce store. For example, the webpage may be a home page of an e-commerce store (for example, a home page of the XX official flagship store), or a shopping webpage of a specific product (for example, a new seasonal clothing item), and the like. The webpage may also be a home page of a main venue of an event of a certain activity, an activity page corresponding to the current user in a certain activity, and the like. Of course, a variety of other types of content may also be configured as target content presented in a particular region of the content presenting page.

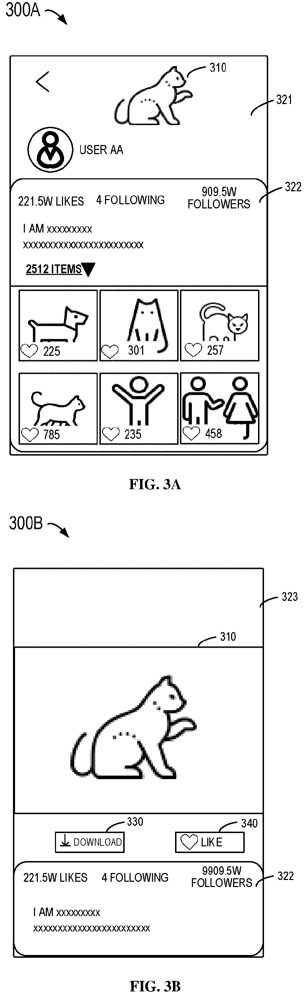

As an example, Fig. 3A illustrates a schematic diagram of an example page where the target content presented in a first region is an image, according to some embodiments of the present disclosure. The page presented in Fig. 3A is a content presenting page 300A of a target user (user AA). In the content presenting page 300A, the first region 321 presents the target content 310. The target content 310 is an image (for example, an image of a cat). In the first region 321 may presents the entire content of the image or presents at least a portion of the content of the image. The image may be an image locally uploaded by the target user (for example, an image photographed by the user for its cat), an image posted by the target user (for example, an image posted by the user for its cat playing with other animals), an image posted by other users, and the like. The target content 310 is presented in a background format.

As shown in the figure, the second region 322 presents user profile information and works related to the target user. The works related to the target user has a large number and relate to different categories. To clearly present the works under each category, the page shown may include a plurality of navigation tabs, for example, navigation tabs such as "Works", "Likes", "Collections" and the like. For example, under the "Works" navigation tab items may include various media works publicly published by the user, under the "Collections" navigation tab items may include various media content collected by the user, and under the "Likes" navigation tab item may include various media contents liked by the user. When a user clicks a corresponding navigation tab to make it the interactive focus, the media content corresponding to the navigation tab will be presented to the user, and the navigation tab will be prominently presented. In this case, when other users view the content presenting page of the target user, they can view all the media content under the target user's "Works", "Collections", and "Likes" navigation tabs.

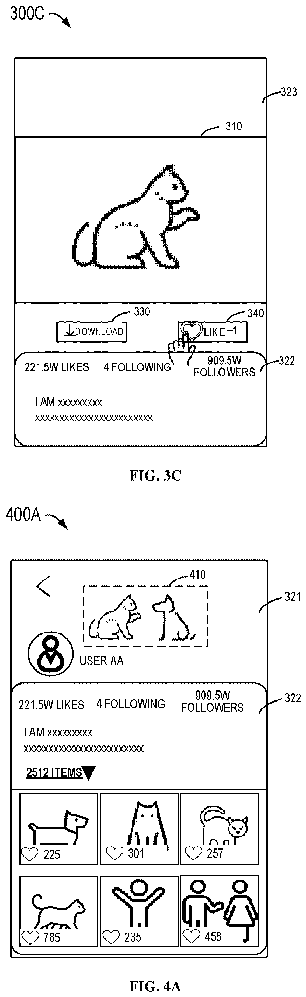

Similarly, FIG. 4A illustrates a schematic diagram of an example page in which target content presented in a first region is a video, according to some embodiments of the disclosure. In the content presenting page 400A presented in Fig. 4A, the first region 321 presents target content 410. The target content 410 is a video (for example, a video of a cat playing with a dog). In the first region 321, all content of a certain frame from the video may be presented, and at least a portion of content of a certain frame from the video may also be presented. The video may be a video locally uploaded by a target user (for example, a video recorded by a user for its cat and dog), a repost of the video posted by the target user (for example, a video posted by a user for its cat and dog playing), a repost of the video posted by other users, and the like.

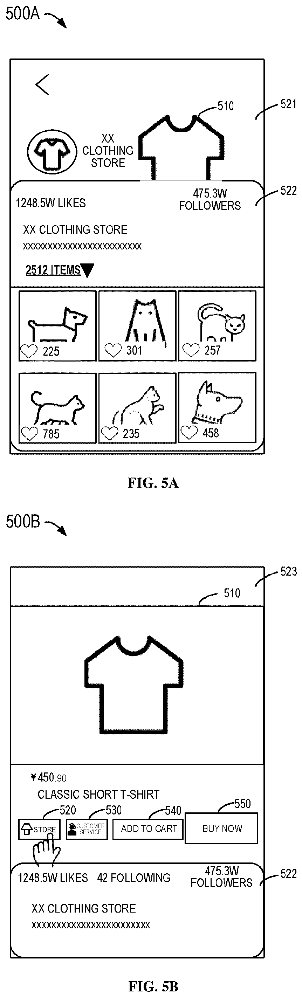

As an example, Fig. 5A illustrates a schematic diagram of target content presented by a first region as an example page of a webpage, such as an e-commerce webpage, according to some embodiments of the present disclosure. In the content presenting page 500A presented in Fig. 5A, the first region 521 presents target content 510. The target content 510 may be a webpage associated with a product in the store. For example, the target content 510 may be a purchase webpage for presenting the clothing in the store (for example, a new short T-shirt). In the first region 521, the entire content of the webpage may be presented, and at least a portion of the content of the webpage may also be presented (for example, a partial presentation of some new short T-shirt).

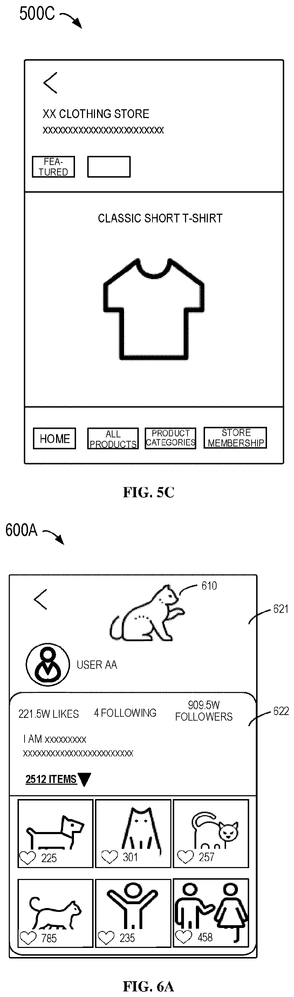

Similarly, Fig. 6A illustrates a schematic diagram of an example page in which target content presented by a first region is a webpage, for example, an activity webpage, according to some embodiments of the disclosure. In the content presenting page 600A presented in Fig. 6A, the first region 621 presents target content 610. The target content 610 may be a webpage associated with some activities. For example, the target content 610 may be a promotional webpage for presenting certain activities related to the target user, a webpage for the target user participating in the activities, and the like. The entire content of these activity-related webpages may be presented in the first region 621, as well as at least a portion of the content (for example, activity promoting images, slogans) of the activity-related webpages.

In the foregoing, with reference to Fig. 3A, Fig. 4A, Fig. 5A, and Fig. 6A, it is as an example described that the terminal device 110 presents target content (all content or a part of content) in the first region of the content presenting page of the user. The target user may modify the target content in the content presenting page, and the modified target content (for example, an image, a video, and a webpage) may be stored by the terminal device 110, to be directly invoked next time. Other users except the target user usually cannot modify the target content. In this way, by modifying the target content in the content presenting page, it is not only convenient for different types of users to present its own personalized characteristics, but also enables the content presenting page to present diversified target content.

Returning to Fig. 2, at block 220, in response to a first preconfigured operation in the content presenting page, the terminal device 110 expands the first region as a first expanded region such that at least part of the second region is hidden or reduced. At block 230, the terminal device 110 presents the target content and at least one interactive interface element associated with the target content in the first expanded region.

By expanding the first region, the target content in the first region is completely presented, for example, when the target content is an image, a video and a webpage, the first expanded region can present the entire image, video and webpage content. In some embodiments, if the target content comprises dynamic content, for example, a video, the dynamic content may also be played automatically when the first expanded region is presented. It is assumed that the second region in the content presenting page is the content of "first floor", and by means of a preconfigured operation, the user can enter "second floor" corresponding to the first region, to view the entire target content presented therein.

In consideration of the limitation of the interface presenting region, the expansion of the first region will be accompanied by the reduction of the second region. Therefore, at least a portion of the second region is hidden or reduced, and originally presented content in the second region is correspondingly at least partially hidden or reduced. As such, through the first preconfigured operation, the first expanded region may be presented as a foreground of the content presenting page, and the second region may be presented as a background of the content presenting page. In some embodiments, the second region that is reduced or hidden may also be presented non-prominently, for example, the content in the second region may be faded out, so that the content in the first expanded region may be presented prominently and the user may be guided to interact.

In some embodiments, the first preconfigured operation for expanding the first region may be configured as a specific operation that may be in a specific region in the content presenting page. As an example, the first preconfigured operation may include a pull-down operation such as a gesture operation of pressing and sliding downward a certain distance. The pull-down operation not only makes it more convenient for the user to trigger the expansion of the first region, but also enables the user to obtain the "boarding the second building" to view more interactive experiences. In some embodiments, a dynamic effect similar to that of a rubber band may also be presented during the performance of a pull-down operation to represent the expanding process from the first region to the first expanded region. In addition to the pull-down operation, the first preconfigured operation may additionally or alternatively include any proper operation such as another slide operation (for example, a slide operation such as left slide or right slide), and a multi-tap operation. In some embodiments, the preconfigured operation triggering the expansion of the first region is an operation at any position in the content presenting page, or at a specific position (for example, in the field of the first region).

**In** addition to presenting the full target content, in an embodiment of the present disclosure, one or more interactive interface elements are further provided in the first expanded region for supporting further interactions with the target content. That is, in the first expanded region, not only viewing of the full target content but also interaction with the target content is supported. Herein, the interactive interface element refers to an interface element that can be operated by a user in a manner of clicking, sliding, hovering, or the like to complete interactions. The interactive interface element may be presented in a form such as a button, a slider, and a text block, and various visual forms such as a shape, a size, a background pattern, and a color of the interactive interface element may be configured as required.

As examples, the interactive interface elements may include interface elements for content liking, interface elements for commenting interaction, interface elements for collecting content, and interface elements for downloading content. For example, if the target content is an image, the interactive interface elements may include "Download", "Like", "Collect" and the like. If the target content is a video, the interactive interface elements may include "Like" "Comment" "Collect" and the like. By way of example, the interactive interface elements may also include interface elements for jumping to a predetermined page. For example, if the target content is an e-commerce store webpage, such as a product purchasing webpage, the interactive interface elements may include "store", "customer service", "purchase now" and the like. The user clicks interface elements such as "store", "customer service", and "purchase now", and the page may jump to a corresponding store home page, a customer chat page, a commodity payment page, and the like. For example, if the target content is an activity webpage, the interactive interface elements may include "voting" "like" "learn more about the activity details," and the like. The user clicks a "vote" or "like" interface element, which may vote or increase the number of likes for people and/or events involved in the activity. The user clicks on an interface element such as "learn more about the activity details", and the page may redirect to a corresponding active details page. As an example, the interactive interface element may also be used for an interface element that adds an object to a preconfigured list. For example, if the target content is an e-commerce webpage such as a product purchasing webpage, the user clicks "add in shopping cart" to add the product to the shopping cart, and although the page does not redirect, the product has already been added to the shopping cart.

The foregoing merely provides an example of the interactive interface elements that may be provided in the first expanded region. In real application, other interactive interface elements may be configured according to interaction requirements, for example, an interface element used for content forwarding, an interface element used for content sharing, and the like. In some embodiments, the type of interactive interface element presented in the first expanded region (for example, the type of interaction operations supported) may be associated with the type of target content presented therein to enable adaptation to interaction with specific content.

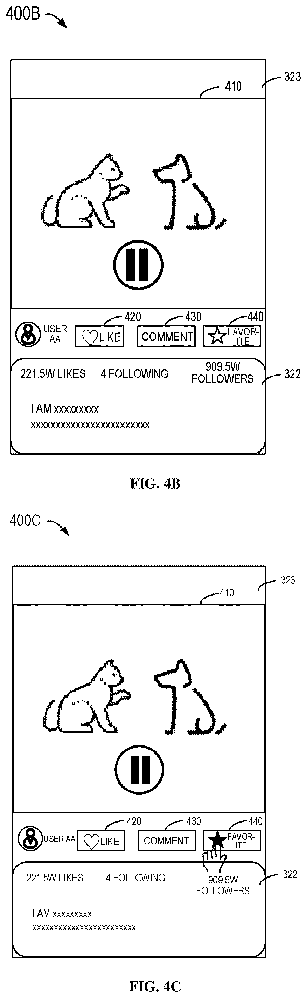

As an example, Fig. 3B illustrates a schematic diagram of target content presented for a first expanded region as an example page of an image, according to some embodiments of the disclosure. Fig. 4B illustrates a schematic diagram of an example page in which the target content presented by the first expanded region is a video, according to some embodiments of the disclosure. The content presenting page 300B and the content presenting page 400B presented in Figs. 3B and 4B are respectively pages after the first region 321 in Figs. 3A and 4A is pulled down, respectively. As can be seen, in the content presenting pages 300B, 400B, the first region 321 is expanded as a first expanded region 323 while the second region 322 is partially hidden or reduced, where the lower portion of the content in the second region 322 is no longer visible. Because the size of the first expanded region 323 is increased compared with the size of the first region 321 shown in Fig. 3A, the size of the second region 322 is reduced.

In the content presenting page 300B, the first expanded region 323 includes the target content 310, and the target content 310 is an image. The first expanded region 323 also includes interactive interface elements associated with the target content 310, such as a "Download" interface element 330, and a "Like" interface element 340. In the content presenting page 400B, the first expanded region 323 includes the target content 410, and the target content 410 is a video. The first expanded region 323 also includes interactive interface elements associated with the target content 410 such as a "Like" interface element 420, a "Comment" interface element 430, and a "Collect" interface element 440. Note that the interactive interface elements shown in Fig. 3B and Fig. 4B, and other figures, respectively, are merely examples, and other interactive interface elements may be configured according to specific content.

Similarly, Fig. 5B illustrates a schematic diagram of an example page in which the target content presented by the first expanded region is an e-commerce, according to some embodiments of the disclosure. The content presenting page 500B presented in Fig. 5B is a page after the first region 521 in Fig. 5A is pulled down. As can be seen, in the content presenting page 500B, the first region 521 is extended as the first extended region 523, while the second region 522 is partially hidden, and the content in the lower part is no longer visible. Since the size of the first expanded region 523 is increased compared with the size of the first region 521 shown in Fig. 5A, the size of the second region 522 is reduced. In the content presenting page 500B, the first expanded region 523 includes the target content 510, and the target content 510 is a product purchasing webpage. The first expanded region 323 also includes interactive interface elements associated with the target content 510, such as a "store" interface element 520 for directing to a store front page, a "guest" interface element 530 for directing to a customer service related page, a "adding in shopping cart" interface element 540 for adding a presented item to a shopping cart list, an "purchase now" interface element 550 for directing to an item purchasing page, and the like.

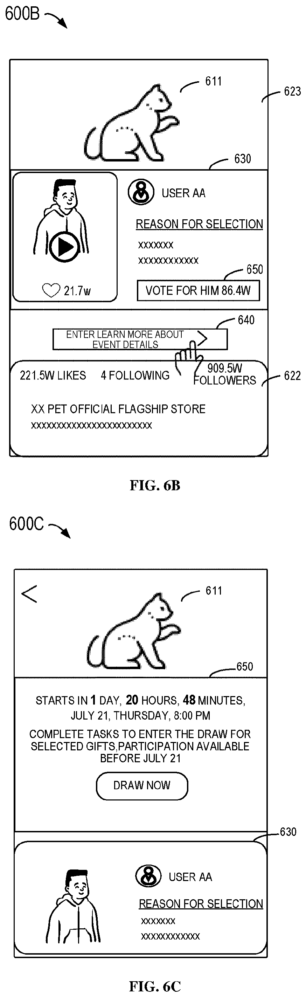

Fig. 6B illustrates a schematic diagram of an example page in which target content presented by a first expanded region is an activity webpage, according to some embodiments of the disclosure. The content presenting page 600B presented in Fig. 6B is a page after the first region 621 in Fig. 6A is pulled down. As can be seen, in the content presenting page 600B, the first region 621 is extended as the first expanded region 623, while the second region 622 is partially hidden, and the content in the lower part is no longer visible. Since the size presented by the first expanded region 623 is increased compared to the size presented by the first region 621 shown in Fig. 6A, the size presented by the second region 622 is reduced. In the content presenting page 600B, the first expanded region 623 includes target content 610, and the target content 610 is an activity webpage. For example, the activity webpage includes an activity promotional image 611 and a user profile page 630. The first expanded region 623 further includes interactive interface elements associated with the target content 610, such as an "learn more about activity details" interface element 640 and a "vote for him" interface element 650.

In the foregoing, with reference to Fig. 3B, Fig. 4B, Fig. 5B, and Fig. 6B, as an example describes that the terminal device 110 detects the first preconfigured operation in the content presenting page and extends the first region as the first extended region. Through preconfigured operations, a user can conveniently and quickly browse target content presented in a first expanded region of a content presenting page, and interact with an interactive interface element in the first expanded region.

In some embodiments, when a target user enters a content presenting page of itself, the target content presented to the user is consistent with target content presented to other users when other users enter the content presenting page of the current user. In some embodiments, the interactive interface elements presented in the first expanded region may also be consistent for the target user and other users. This manner of presenting may be referred to as "host-guest state consistency'.

In some embodiments, the target content and/or the interactive interface elements presented in the first expanded region may be determined based on a current user accessing the content presenting page. In other words, at least a portion of the presented target content may be different for the target user and other users, and/or the presented one or more interactive interface elements may be different. This manner of presenting may be referred to as "host-guest state inconsistency". In some embodiments, for a target user, interactive interface elements for management (for example, modification, replacement, and the like) of target content may be presented in the first expanded region, while such interactive interface elements are not visible to other users. One or more of the interactive interface elements exposed to other users may also not be presented to the target user. For example, for activity-related content, if a target user is accessing a content presenting page, interface elements such as an activity content editing portal and an activity management portal may be presented to the target user; If a non-target user is accessing a content presenting page, interface elements such as an activity participation portal may be presented. Certainly, these are merely some specific examples, and other designs may be made according to actual situations. Additionally or alternatively, target content presented to a target user and a non-target user, including a presenting manner of the target content in the first region and the first extensible region, may also be different.

In some embodiments, in response to a selection of a first interactive interface element of the at least one interactive interface element, the terminal device 110 may perform an interaction operation corresponding to the first interactive interface element. The first interactive interface element refers to any interface element of the at least one interactive interface element. For example, if it is detected that a user clicks on a "Download" interface element, the terminal device 110 may download target content such as an image and a video. If it is detected that the user clicks the "Like" interface element, the terminal device 110 may record the number of likes of the target content. If it is detected that the user clicks on the "Comment" interface element, a comment box may be provided for inputting comment content, and the terminal device 110 may record and present such comment content. If it is detected that the user clicks the "Collect" interface element, the terminal device 110 may store target content such as an image and a video.

As an example, Fig. 3C illustrates a schematic diagram of an example page of interaction in a first expanded region of a presenting image, according to some embodiments of the disclosure. As discussed above, it can be seen from Fig. 3C that the terminal device 110 detects a click operation performed by the user on the "Like" interface element 340, and the "Like" interface element may be highlighted. Fig. 4C illustrates a schematic diagram of an example page of interaction in presenting a first expanded region of a video, according to some embodiments of the disclosure. It can be seen from Fig. 4C that, the terminal device 110 detects a click operation performed by the user on the "Collect" interface element 440, and the "Collect" interface element 440 may be highlighted, and the number of clicks is increased by 1. Fig. 5C illustrates a schematic diagram of an example page showing interaction in a first expanded region of an e-commerce webpage being presented, according to some embodiments of the disclosure. The terminal device 110 detects a click operation performed by the user on the "store" interface element 540 and directs to the store page 500c. Fig. 6C illustrates a schematic diagram of an example page of interaction in presenting a first expanded region of an active webpage, according to some embodiments of the disclosure. The terminal device 110 detects a click operation performed by the user on the "learn more about activity details" interface element 640 and jumps to the activity detail page 600C. As shown, the activity detail page 600C includes an activity promotional image 611, an activity profile page 650, and a user profile page 630. Given the limitations of the interface presenting region, the content originally presented by the user's introductory page 630 is partially hidden.

In some embodiments, after presenting the first expanded region, in response to a second preconfigured operation in the content presenting page, the terminal device 110 may restore presenting of an original content presenting page, which includes a first region that is not expanded and a second region that is not hidden or reduced. In this way, after the target content is expanded and presented and possible interaction is performed, the user may be allowed to restore the original content presenting page through an operation, to browse other content in the content presenting page.

As an example, the second preconfigured operation may include a pull-up operation such as a gesture operation of pressing and sliding upward a certain distance. The pull-down operation enables the user to trigger the first expanded region to be restored to the first region, that is, the first expanded region is reduced. In addition, the pull-up operation may also restore the at least partially hidden or reduced second region to full presentation. In some embodiments, a dynamic effect similar to a rubber band may also be presented during the performance of the pull-up operation to represent the shrinking process from the first expanded region to the first region. For example, in the content presenting pages 300B, 300C, if the terminal device 110 detects the second preconfigured operation (for example, the pull-up operation), the content presenting pages are restored to the content presenting pages 300A, 300B. Similarly, in the personal page 400B, 400C, if the terminal device 110 detects a second preconfigured operation (for example, a pull-up operation), the content presenting page is restored to the content presenting page 400A, 400B.

In addition to the pull-up operation, the second preconfigured operation may additionally or alternatively include any proper operation such as another slide operation (for example, a slide operation such as a left slide operation or a right slide operation), and a multi-tap operation. In some embodiments, the preconfigured operation of restoring the first region and the second region is triggered by an operation at any position or a specific position (for example, in the field of the first expanded region) in the content presenting page.

Examples of interaction of the terminal device 110 in presenting a first expanded region of an image, video, webpage are as an example described above referring to Fig. 3C to Fig. 6C. Through diverse interaction methods, a user may be encouraged to perform interaction on specific contents in a content presenting page, and the current user is facilitated to highlight personal characteristics by using a content presenting page thereof, to realize content promotion. This not only can effectively improve the mutual focus and interaction of social users, but also can satisfy the business requirements of the business users (for example, being able to improve the conversion rate, the income, and the like), and improve the popularity of the activity participation, and the like.

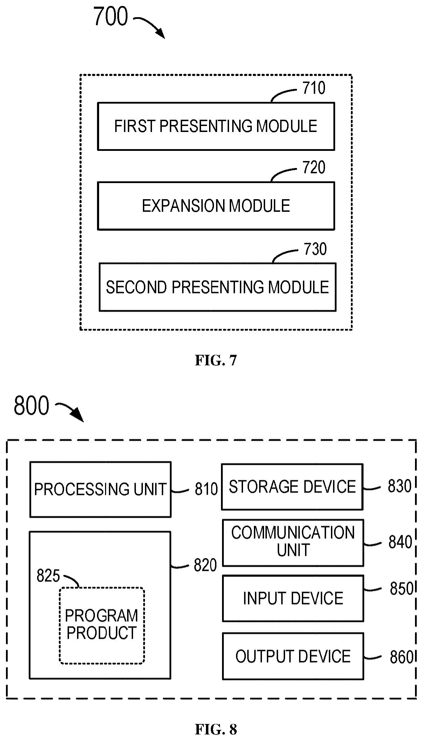

Fig. 7 illustrates a schematic block diagram of an apparatus 700 for interaction, according to some embodiments of the disclosure. The apparatus 700 may be implemented as or comprised in a terminal device 110. The various modules/components in the apparatus 700 may be implemented by hardware, software, firmware, or any combination thereof.

The apparatus 700 comprises a first presenting module 710, configured to present a first region and a second region in a content presenting page of a target user, and the first region presents at least a portion of target content. The apparatus 700 further comprises an expansion module 720 configured to expand the first region as the first expanded region in response to a first preconfigured operation in the content presenting page, so that at least portion of the second region is hidden or reduced. The apparatus 700 also includes a second presenting module 730 configured to present the target content in the first expanded region and at least one interactive interface element associated with the target content.

In some embodiments, the first preconfigured operation comprises a pull-down operation.

In some embodiments, the target content is configurable by the target user, and the type of content configurable by the target user is associated with the type of the target user.

In some embodiments, at least one of the target content and the at least one interactive interface element is determined based on a current user accessing the content presenting page, the current user including the target user or a user other than the target user.

In some embodiments, the apparatus 700 further comprises an execution module configured to, in response to selection of a first interactive interface element of the at least one interactive interface element, execute an interaction operation corresponding to the first interactive interface element.

In some embodiments, the at least one interactive interface element comprises at least: an interface element for content liking, an interface element for comment interaction, an interface element for content collection, an interface element for content downloading, an interface element for navigating to a predefined page, and an interface element for adding an object to a predefined list.

In some embodiments, a type of the at least one interactive interface element is associated with a type of target content.

In some embodiments, the apparatus 700 further comprises a third presenting module configured to present the first region and the second region in response to a second preconfigured operation in the content presenting page.

In some embodiments, the second preconfigured operation comprises a pull-up operation.

In some embodiments, the target content includes at least one of: an image, a video, a webpage.

In some embodiments, Fig. 8 illustrates a block diagram of an electronic device 800 in which one or more embodiments of the present disclosure may be implemented. It should be appreciated that the electronic device 800 shown in Fig. 8 is merely exemplary and should not constitute any limitation on the functionality and scope of the embodiments described herein. The electronic device 800 shown in Fig. 8 may be used to implement the terminal device 110 of Fig. 1.

As shown in Fig. 8, the electronic device 800 is in the form of a general purpose electronic device. Components of the electronic device 800 may include, but are not limited to, one or more processors or processing units 810, a memory 820, a storage device 830, one or more communication units 840, one or more input devices 850, and one or more output devices 880. The processing unit 810 may be an actual or virtual processor and can perform various processes according to programs stored in the memory 820. In a multiprocessor system, multiple processing units execute computer-executable instructions in parallel to improve the parallel processing capabilities of the electronic device 800.

Electronic device 800 typically includes a plurality of computer storage media. Such media may be any available media that is accessible to electronic device 800, including, but not limited to, volatile and non-volatile media, removable and non-removable media. The memory 820 may be volatile memory (for example, registers, cache, random access memory (RAM)), non-volatile memory (for example, read-only memory (ROM), electrically erasable programmable read-only memory (EEPROM), flash memory), or some combination thereof. Storage device 830 may be a removable or non-removable medium and may include a machine-readable medium such as a flash drive, a magnetic disk, or any other medium that may be used to store information and/or data (for example, training data for training) and that may be accessed within electronic device 800.

The electronic device 800 may further include additional removable/non-removable, volatile/nonvolatile storage media. Although not shown in Fig. 8, a magnetic disk drive for reading from or writing to a removable, nonvolatile magnetic disk such as a "floppy disk', and an optical disk drive for reading from or writing to a removable, nonvolatile optical disk may be provided. In these cases, each drive may be connected to a bus (not shown) by one or more data media interfaces. Memory 820 may include a computer program product 825 having one or more program modules configured to perform various methods or actions of various embodiments of the present disclosure.

The communication unit 840 enables communication with other electronic devices over a communication medium. Additionally, the functionality of the components of the electronic device 800 may be implemented in a single computing cluster or in multiple computing machines that are capable of communicating over a communication connection. Accordingly, the electronic device 800 may operate in a networked environment using logical connections to one or more other servers, network personal computers (PCs), or another network node.

Input device(s) 850 may be one or more input devices such as a mouse, keyboard, trackball, and the like. Output device(s) 880 may be one or more output devices such as a display, speakers, printer, and the like. The electronic device 800 may also communicate with one or more external devices (not shown) such as a storage device, a display device, and the like. , as needed through the communication unit 840, with one or more devices that enable a user to interact with the electronic device 800, or with any device (for example, a network card, a modem, and the like. ) that enables the electronic device 800 to communicate with one or more other electronic devices. Such communication may be performed via an input/output (I/O) interface (not shown).

According to an exemplary implementation of the present disclosure, a computer-readable storage medium is provided, on which a computer-executable instruction is stored, wherein the computer-executable instruction is executed by a processor to implement the above-described method. According to an exemplary implementation of the present disclosure, there is also provided a computer program product, which is tangibly stored on a non-transitory computer-readable medium and includes computer-executable instructions that are executed by a processor to implement the method described above.

Aspects of the present disclosure are described herein with reference to flowchart illustrations and/or block diagrams of methods, apparatus, devices and computer program products implemented in accordance with the present disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processing unit of a general purpose computer, special purpose computer, or other programmable data processing apparatus to produce a machine, such that the instructions, which execute via the processing unit of the computer or other programmable data processing apparatus, create means for implementing the functions/acts specified in the flowchart and/or block diagram block or blocks. These computer-readable program instructions may also be stored in a computer-readable storage medium that can direct a computer, programmable data processing apparatus, and/or other devices to function in a particular manner, such that the computer-readable medium storing the instructions includes an article of manufacture including instructions which implement various aspects of the functions/acts specified in the flowchart and/or block diagram block or blocks.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions which execute on the computer, other programmable data processing apparatus, or other devices implement the functions/acts specified in the flowchart and/or block diagram block or blocks.

The flowchart and block diagrams in the Figures illustrate the architecture, functionality, and operation of possible implementations of systems, methods and computer program products according to various implementations of the present disclosure. In this regard, each block in the flowchart or block diagrams may represent a module, segment, or portion of an instruction which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Having described implementations of the disclosure above, the foregoing description is exemplary, not exhaustive, and is not limited to the implementations disclosed. Many modifications and variations will be apparent to those of ordinary skill in the art without departing from the scope and spirit of the implementations described. The choice of terms used herein is intended to best explain the principles of the implementations, the practical application, or improvements to technologies in the marketplace, or to enable others of ordinary skill in the art to understand the implementations disclosed herein.

## Claims

1. A method for interaction, comprising:
presenting a first region and a second region in a content presenting page of a target user, the first region presenting at least a portion of target content;
expanding the first region as a first expanded region in response to a first preconfigured operation in the content presenting page, to cause at least a portion of the second region to be hidden or reduced; and
presenting the target content and at least one interactive interface element associated with the target content in the first expanded region.

2. The method of claim 1, wherein the first preconfigured operation comprises a pull-down operation.

3. The method of claim 1, wherein the target content is configurable by the target user and a type of the content configurable by the target user is associated with a type of the target user.

4. The method of claim 1, wherein at least one of the target content and the at least one interactive interface element is determined based on a current user accessing the content presenting page, and the current user comprises the target user or a user other than the target user.

5. The method of claim 1, further comprising:
in response to a selection of a first interactive interface element of the at least one interactive interface element, performing an interactive operation corresponding to the first interactive interface element.

6. The method of claim 1, wherein the at least one interactive interface element comprises at least:
an interface element for liking content,
an interface element for comment interaction,
an interface element for collecting content ,
an interface element for downloading content,
an interface element for redirecting to a predetermined page,
an interface element for adding an object to a predetermined list.

7. The method of claim 1, wherein a type of the at least one interactive interface element is associated with a type of the target content.

8. The method of claim 1, further comprising:
presenting the first region and the second region in response to a second preconfigured operation in the content presenting page.

9. The method of claim 8, wherein the second preconfigured operation comprises a pull-up operation.

10. The method of claim 1, wherein the target content comprises at least one of: an image, a video, a webpage.

11. An apparatus for interaction, comprising:
a first presenting module, configured to present a first region and a second region in a content presenting page of a target user, the first region presenting at least a portion of target content;
an expansion module, configured to expand the first region as a first expanded region in response to a first preconfigured operation in the content presenting page, to cause at least a portion of the second region to be hidden or reduced; and
a second presenting module, configured to present the target content and at least one interactive interface element associated with the target content in the first expanded region.

12. An electronic device, comprising:
at least one processing unit;
at least one memory coupled to the at least one processing unit and storing instructions for execution by the at least one processing unit that, when executed by the at least one processing unit, cause the device to perform the method of any one of claims 1 to 10.

13. A computer readable storage medium having stored thereon a computer program which, when executed by a processor, implements the method of any of claims 1 to 10.
